# EUROPEAN PATENT SPECIFICATION

(11) **EP 3 795 456 B1**
(45) Date of publication and mention of the grant of the patent: **10.01.2024**
(21) Application number: 19198678.5
(22) Date of filing: 20.09.2019
(51) Int. Cl.: B62D 15/02, G08G 1/16, G08G 1/14, G08G 1/0965

(54) **WAKING-UP PARKED VEHICLES FOR PERFORMING A COOPERATIVE PARKING MANEUVER WITH V2X COMMUNICATION**
AUFWECKEN GEPARKTER FAHRZEUGE ZUR DURCHFÜHRUNG EINES KOOPERATIVEN PARKMANÖVERS MIT V2X-KOMMUNIKATION
RÉVEIL DE VÉHICULES STATIONNÉS PERMETTANT D'EFFECTUER UNE MANEUVRE DE STATIONNEMENT COOPÉRATIVE AVEC COMMUNICATION V2X

(43) Date of publication of application: 24.03.2021
(73) Proprietor: Volkswagen AG, 38440 Wolfsburg (DE); Audi AG, 85045 Ingolstadt (DE)
(72) Inventor: El Assaad, Ahmad, 38448 Wolfsburg (DE); Hehn, Thorsten, 85055 Ingolstadt (DE)
(74) Representative: Rittner, Karsten

(56) References cited:
- WO-A1-2018/007065
- US-A1- 2015 039 211

## Description

The present disclosure is related to a method for starting a parked vehicle located in a parking position in a park mode to perform a cooperative parking maneuver. The disclosure further relates to a method for requesting a cooperative parking maneuver by an arriving vehicle, which arrives at a location of a parked vehicle and intends to perform said cooperative parking maneuver with said parked vehicle. The invention also relates to corresponding computer programs.

In the following years, more and more vehicles will be able to handle an increasing number of situations automatically, without a direct intervention of the driver. In order to handle these situations, the automatic vehicles will be equipped with an increasingly high number of sensors, like ultra-sonic sensors, laser scanners, radar sensors, lidar sensors, cameras, etc. These sensors are used to scan the environment of the vehicle and make this information available to algorithms responsible for moving the autonomous or semiautonomous vehicle safely inside in its environment. One possible use case for autonomous or semiautonomous driving are scenarios with cooperative parking maneuvers.

Some drivers don't respect the subdivision of parking lots or parking lanes in parking spaces. This may be due to an incapability of parking the car properly or due to an absence of a proper labelling of parking spaces with separation marks. This often leads to gaps in parking lots or parking lanes, which cannot be used by other cars arriving at the parking space.

A method for cooperative parking is known for example from DE 10 2015 211 732 A1. In the process, a vehicle that is itself in search of a parking space observes a vehicle in front and recognizes the parking intention of the preceding vehicle. By timely stopping, it supports the parking process of the vehicle ahead.

In US 2015 0 039 173 A1 different cooperative parking scenarios are described in detail. This includes that the parking control management system has permission to activate or initiate car movement among the parked cars, in order to move improperly parked cars to a position inside the parking lines of a parking space.

From DE 10 2010 052 099 A1 it is known a system that has a vehicle external communication unit that is formed to transmit a prompt signal and a functional requirement at a vehicle internal controlling unit. The vehicle internal controlling unit is provided for authentication of the prompt signal. A controlling data is received for executing a requested function during positive authentication according to the functional requirement.

From DE 10 2014 010 002 A1 it is known an apparatus for controlling a device of a motor vehicle including a communication unit configured to shift the device of the motor vehicle from an idle mode to an active mode by sending a first wireless signal. The apparatus is configured to specify a frequency and/or a channel for transmitting and/or receiving the first wireless signal in the active mode and to control the device so that the device is only shifted from the idle mode to the active mode when the first wireless signal is received at the specified frequency and/or the specified channel.

From US 7,498,954 an arrangement and a method and a service that allows drivers wanting to parallel park to request unoccupied surrounding vehicles to move forward and/or backwards in order to increase the space available to the requesting vehicle and then subsequently allows the surrounding vehicles to return to their original position. In one aspect of the invention, a cooperative parking system comprises a switch to initiate the cooperative parking system and a transmitter connected to the switch either contained within a hand-held programmable device or within the parking vehicle.

US 2015/0039211 A1 discloses a method for parking assistance for a vehicle, wherein the parking of said vehicle on a parking space at least partly occupied by a second vehicle is enabled by transmitting a maneuver request to the second vehicle. A priority is allocated to the driver of the first vehicle, wherein said priority implements a classification of said driver with respect to the extent to which the driver is entitled to the prioritized use of the parking space. Based on said priority, the maneuver request is transmitted to the second vehicle. US 2015/039211 A1 discloses the features of the preamble of claims 1 and 9.

WO 2018/007065 A1 discloses a vehicle parking assistance apparatus. The apparatus comprises receiving means arranged to receive vehicle data for one or more autonomous vehicles within a first range of a subject vehicle; processing means arranged to determine from the vehicle data, for each of the one or more autonomous vehicles, if there is a gap, between the autonomous vehicle and an object adjacent to the autonomous vehicle, equal to or greater than a subject vehicle minimum parking gap; and if there is no gap determined to be equal to or greater than the subject vehicle minimum parking gap, to instruct at least one of the one or more autonomous vehicles within the first range of the subject vehicle to move to provide a gap equal to or greater than a subject vehicle minimum parking gap.

These solutions encounter the problem that the channel or frequency to which a vehicle needs to listen will be permanently scanned when the vehicle is in a park mode. The reservation of frequencies or channels is made by the vehicles themselves or by the handheld device with which the vehicle could be switched from said park mode to an active mode.

It is an object of the present invention to provide a more energy efficient solution for waking-up parked vehicles in order to perform a cooperative parking maneuver on request of an arriving vehicle searching a parking space.

It is another object to increase reliability of the wake-up operation for greater parking areas where plenty of cars are parking.

This object is achieved by a method for starting a parked vehicle located in a parking position in a park mode to perform a cooperative parking maneuver according to claim 1, a corresponding computer program according to claim 8, a method for requesting a cooperative parking maneuver by an arriving vehicle which arrives at a location of a parked vehicle according to claim 9, and a corresponding computer program according to claim 15. The dependent claims include advantageous further developments and improvements of the invention as described below.

The invention in one embodiment relates to a method for starting a parked vehicle located in a parking position in a park mode to perform a cooperative parking maneuver, said parked vehicle being equipped with an on-board communication module, said method comprising the steps of registering, with an exchange of messages, wake-up information in a parking backend server once the parked vehicle is put in said park mode. Said wake-up information comprises information about communication resources to be used for sending a wake-up message to said parked vehicle and for identifying said wake-up message. The solution further comprises a step of listening to said registered communication resources during said park mode. When receiving said wake-up message from an arriving vehicle, the method further comprises a step of leaving said park mode and switching to a normal operation mode, sending a starting request message to said parking backend server, receiving a starting message from said parking backend server, and starting the engine or motor for performing said cooperative parking maneuver. The idea to engage a parking backend server for assigning wake-up information to the parked vehicles provides for a greater reliability in performing cooperative driving maneuvers with parked vehicles.

In an improved embodiment, the solution comprises that said step of listening to said registered communication resources during said park mode comprises sporadically listening to said registered communication resources during said park mode. This allows for a further reduction in energy consumption for the parked vehicle. If e.g. the parked vehicle listens to the corresponding communication resources only one time in a second instead of every ms, there is a subjective reduction in energy consumption for the scanning operation, thereby saving battery life in the parked vehicle.

In a more concrete embodiment, the step of sporadically listening to said registered communication resources during said park mode comprises listening to said registered communication resources periodically in an interval which is longer than an interval with which said arriving vehicle should repeat its wake-up message. This makes sure that the wake-up message will eventually be received in a listening operation of a parked vehicle.

It is further advantageous when said registered wake-up information comprises an authentication preamble, which needs to be used in said wake-up message which is sent by the arriving vehicle to identify said wake-up message. This increases the security of the wake-up communication. This way, it not easily possible for an intruder to fake the wake-up message and start a driving maneuver unauthorized.

When the wake-up communication is performed with a mobile radio communication system, such as LTE or 5G, it is of advantage if said registered wake-up information further comprises a resource pool configuration to which said parked vehicle should listen in said park mode. A resource pool can be reduced to just a few resource blocks, which will be transferred on a frequency bandwidth of only 180 kHz such that in a 20 MHz channel plenty of communication resource reservations are possible to serve a high number of vehicles in large parking areas without having interfering individual wake-up messages. In this form, the wake-up procedure can contribute to less power consumption on the parked vehicle on the direct-link between vehicles, since the parked vehicle only needs to listen to the agreed wake-up frequencies.

In a preferred embodiment, a step of checking the authentication preamble is executed as part of a wake-up process before waking up the whole board electronics of said parked vehicle, wherein the step of waking up the board electronics is suppressed if said step of checking the authentication preamble results in the finding that the authentication preamble does not match the registered authentication preamble. This also contributes much to an energy efficient solution for the wake-up process, since powering-up the whole board electronics is energy consuming.

Moreover, the security of cooperative parking maneuvers could be increased further with a start key, which said parking backend server should send in said starting message in order to start the engine or motor for performing said cooperative parking maneuver.

It is of advantage if said messages for registering wake-up information and said starting request message are sent in a format of an LTE or 5G Uu-link communication message and said wake-up message is sent in a format of an LTE or 5G direct-link communication message. The direct-link communication message is now called PC5-link in the 5G communication system and was formerly called sidelink communication message in the LTE communication system. These communications are direct communications between vehicle and parking backend server if the parking backend server is positioned at the place of a base station.

The disclosure also relates to a computer program comprising instructions, which, when executed by a computer, causes the computer to perform the steps of said described method for starting a parked vehicle located in a parking position in park mode to perform a cooperative parking maneuver. The computer program may, for example, be provided for download or stored on a computer-readable storage medium.

The invention in another related embodiment comprises a method for requesting a cooperative parking maneuver by an arriving vehicle, which arrives at a location of a parked vehicle and intends to perform said cooperative parking maneuver with said parked vehicle. Here, it is advantageous if said method comprises the step of sending a cooperative parking intention message to a parking backend server, said cooperative parking intention message comprising at least an estimated position of said parked vehicle and a request for wake-up information for said parked vehicle, said wake-up information comprising information about communication resources to be used for sending a wake-up message to said parked vehicle and for identifying said wake-up message. This provides for said greater reliability in assigning communication resources to the individual parked vehicles.

It is also advantageous if said cooperative parking intention message further comprises a position of the arriving vehicle, wherein said estimated position of the parked vehicle is formatted as a position relative to the position of said arriving vehicle. This makes it possible to estimate the position of the parked vehicle with greater accuracy, since the surroundings observation sensors of the arriving vehicle can be used to increase reliability.

In another embodiment of said invention, said arriving vehicle receives the requested wake-up information from said parking backend server in one or more response message to said cooperative parking intention message, said response messages comprising an authentication preamble, which needs to be used in a wake-up message which is sent by the arriving vehicle to identify said wake-up message. This increases security of the wake-up operation.

It is likewise advantageous if said one or more response messages further comprise a resource pool configuration to be used for sending said wake-up message to said parked vehicle to which said parked vehicle is listening in a park mode. As explained before, this greatly increases diversification of said wake-up message assignments for larger parking areas, thereby eliminating the risk of interferences due to a double assignment of the same communication resources to nearby vehicles.

Also it is advantageous if said arriving vehicle repeatedly sends said wake-up message to said parked vehicle after having received the requested wake-up information from said parking backend server in one or more response messages. This makes sure that the wake-up message will be received in one listening period, even though the interval for two succeeding listening periods is longer than the repetition interval for sending wake-up messages.

Again, it is also advantageous that said cooperative parking intention message and said one or more response message to said cooperative parking intention message are sent in a format of an LTE or 5G Uu-link communication message, and said wake-up message is sent in a format of an LTE or 5G direct-link communication message.

The disclosure further relates to a computer program comprising instructions, which, when executed by a computer, cause the computer to perform the steps of the described method for requesting a cooperative parking maneuver by an arriving vehicle which arrives at a location of a parked vehicle and intends to perform said cooperative parking maneuver with said parked vehicle .

Further features of the present invention will become apparent from the following description and the appended claims in combination with the drawings.
- Fig. 1: illustrates a typical parking scenario in cities;
- Fig. 2: illustrates how an inconvenient parking situation can be improved with a cooperative parking maneuver;
- Fig. 3: illustrates the resulting parking gap filling after performance of the cooperative parking maneuver;
- Fig. 4: illustrates the principle architecture of a V2V and V2X communication system;
- Fig. 5: shows a block diagram of a vehicle's board electronics system;
- Fig. 6: shows a first stage message exchange diagram for negotiating communication resources for a cooperative parking situation;
- Fig. 7: the location and structure of a resource block in a multi-carrier transmission method;
- Fig. 8: the structure of a transmission frame according to the LTE standard;
- Fig. 9: shows a second stage message exchange diagram for requesting negotiated communication resource information for preparing a cooperative parking operation;
- Fig. 10: shows a third stage message exchange diagram for starting a cooperative parking situation; and
- Fig. 11: shows a flow chart of a computer program which is executed during the phase of listening to wake-up messages.

For a better understanding of the principles of the present invention, exemplary embodiments of the invention are explained in more detail below with reference to the figures.

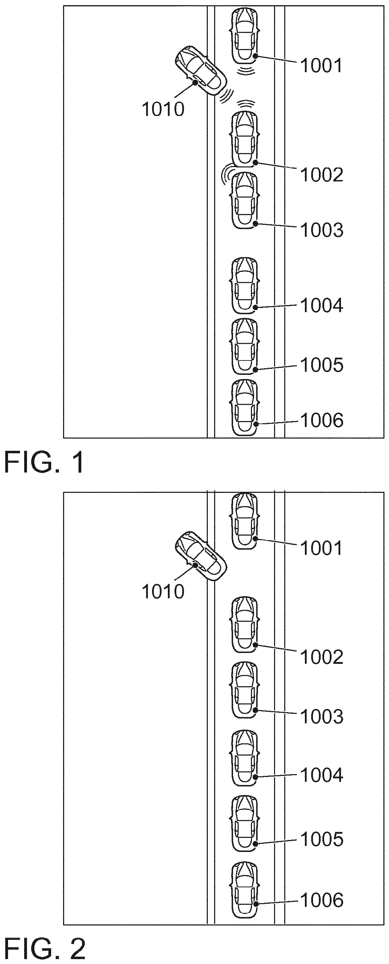

The typical use case of the invention is a problem with parking of a vehicle on a road in a city where not enough parking space is available. The vehicles need to park close to each other such that the parking space will be utilized completely. Now, Fig. 1 shows a situation with which drivers are encountered pretty often. The same problem may occur even with vehicles equipped with autonomous driving capability. The vehicles 1001 to 1006 all park at the side of the road one after the other. Reference number 1010 denotes an arriving vehicle desiring to park in this area, too. It is considered, that all vehicles 1001 to 1006 plus 1010 are equipped with autonomous driving capability. This also means that they are also equipped with surroundings observation means, which will be described more in detail later on. With these surroundings observation means, the vehicle 1010 when arriving will discover that there is a gap between vehicle 1001 and vehicle 1002 where it might be possible to park. There is, however, the problem that there is not enough space to drive into the gap autonomously due to the fact that the driver of the autonomous vehicle 1003 has improperly parked his vehicle. When vehicle 1010 was arriving it was able to learn that between vehicle 1003 and 1004 there is somewhat more space available than needed for departing. Arriving vehicle 1010 therefore concludes that it will be able to park in the gap between vehicles 1001 and 1002, if vehicle 1003 drives back closer to vehicle 1004 and vehicle 1002 does the same, thereby increasing the gap between vehicle 1001 and 1002. Since vehicles 1001 and 1002 are parked, they need to be activated in order to perform the cooperated parking maneuver requested by arriving vehicle 1010. The invention deals primarily with an energy efficient solution for activating the vehicles parked at the road side to perform the cooperative parking maneuver.

Fig. 2 shows the moment when vehicles 1002 and 1003 have driven back in order to fill the gap between vehicles 1003 and 1004. Vehicle 1010 is then able to enter the gap between vehicle 1001 and 1002 properly.

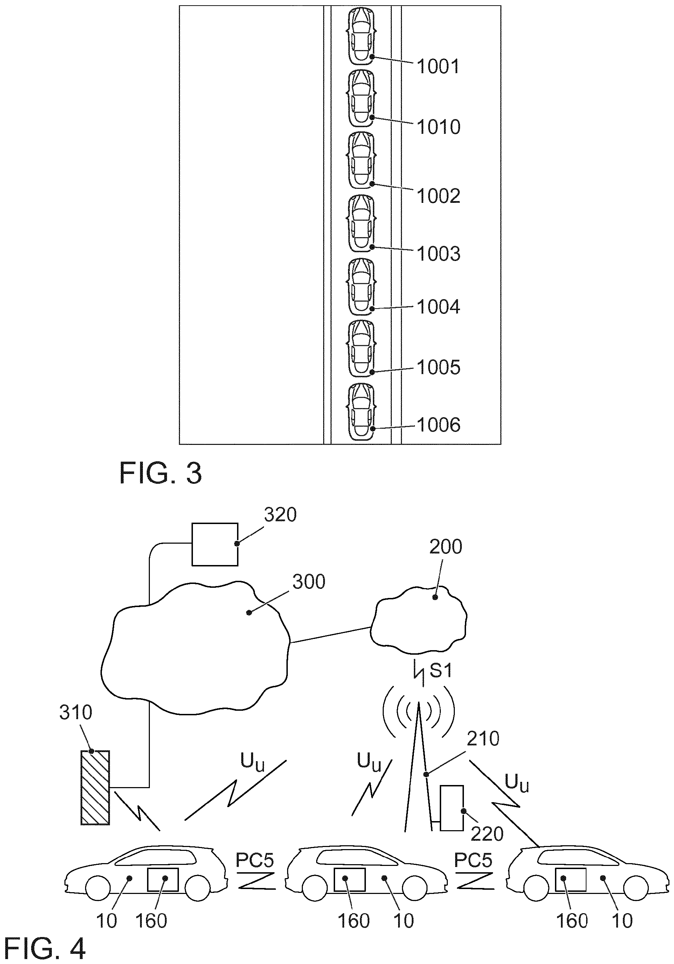

Fig. 3 finally depicts the final state of the cooperative parking maneuver when vehicle 1010 has reached the parking position in the gap between vehicles 1001 and 1002.

Fig. 4 shows the system architecture for the proposal. Reference number 10 denotes a user device. The depicted user device is exemplified as a vehicle and more in particular it is a car. In other examples it may be differently exemplified, e.g. a smart phone, a smart watch, a tablet computer, notebook or laptop computer or the like. Shown is a passenger car. If exemplified with a vehicle, it may be any type of a vehicle. Examples of other types of vehicles are: buses, motorcycles, commercial vehicles, in particular trucks, agricultural machinery, construction machinery, rail vehicles, etc. The use of the invention would generally be possible in land vehicles, rail vehicles, watercrafts and aircrafts. The vehicle 10 is equipped with an on-board connectivity module 160 including a corresponding antenna such that the vehicle 10 can participate in any form of a mobile communication service. Fig. 4 illustrates that vehicle 10 may transmit and receive signals to and from a base station 210 of a mobile communication service provider.

Such base station 210 may be an eNodeB base station of an LTE (Long Term Evolution) mobile communication service provider or a gNB base station of a 5G mobile communication provider. The base station 210 and the corresponding equipment is part of a mobile communication network with a plurality of network cells, where each cell is served by one base station 210.

The base station 210 in Fig. 4 is positioned close to a main road on which the vehicle 10 is driving. Of course, other vehicles may also drive on the road. In the terminology of LTE, a mobile terminal corresponds to a user equipment UE, which allows a user to access network services, connecting to the UTRAN or Evolved-UTRAN via the Uu radio interface. Typically, such user equipment corresponds to a smart phone. Of course, mobile terminals are also used in the vehicles 10. The cars 10 are equipped with said on-board communication module OBU 160. This OBU corresponds to an LTE or any other communication module with which the vehicle 10 can receive mobile data in downstream direction and can send such data in upstream or in direct device-to-device direction over said Uu-interface. Modern vehicles are also equipped with vehicle-to vehicle communication capability V2V. The interface, which is designed for this purpose, is called PC5-interface. The on-board communication module 160 is also equipped with PC5-interface capability.

In terms of the LTE mobile communication system, the Evolved UMTS Terrestrial Radio Access Network E-UTRAN of LTE consists of a plurality of eNodeBs, providing the E-UTRA user plane (PDCP/RLC/MAC/PHY) and control plane (RRC) protocol terminations towards the UE. The eNodeBs are interconnected with each other by means of the so-called X2 interface. The eNodeBs are also connected by means of the so-called S1 interface to the EPC (Evolved Packet Core) 200, more specifically to the MME (Mobility Management Entity) by means of the S1-MME and to the Serving Gateway (S-GW) by means of the S1-U interface.

From this general architecture, Fig. 4 shows that eNodeB 210 is connected to the EPC 200 via the S1 interface and that EPC 200 is connected to the Internet 300. The backend server 320 to which the vehicles 10 send messages to and receive messages from is also connected to the Internet 300. In the field of cooperative and autonomous driving, the backend server 320 typically is located in a traffic control center. The S1 interface may be reduced to practice with wireless communication technology such as with the help of microwave radio communication by means of directional antennas or wired communication technology based on fiber cables. Finally, an infrastructure network component is also shown. This may be exemplified by a road-side unit RSU 310. For the ease of implementation, it is considered that all components have assigned an Internet address, typically in the form of an IPv6 address, such that the packets transporting messages between the components can be routed correspondingly.

The various interfaces of the LTE network architecture are standardized. It is particularly referred to the various LTE specifications, which are publicly available for the sake of sufficiently disclosing further implementation details.

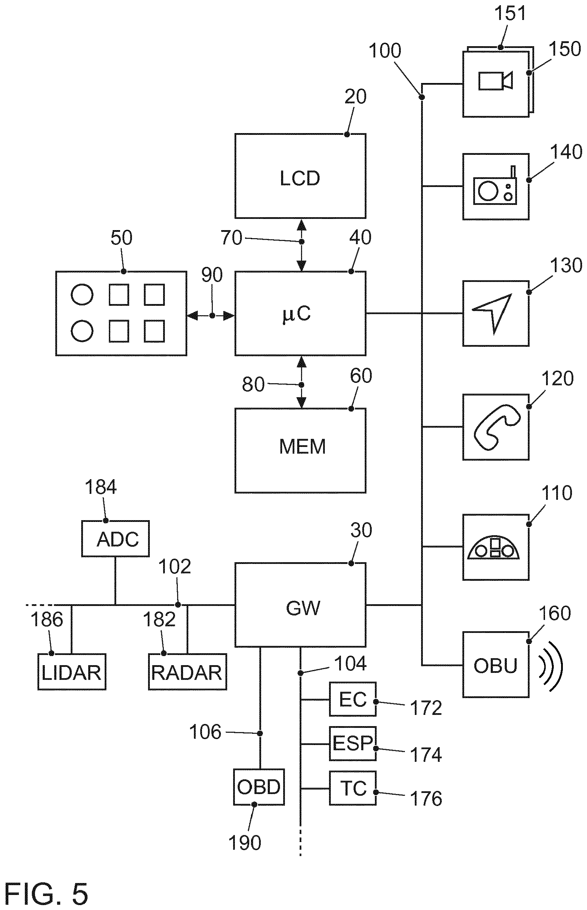

Fig. 5 shows schematically a block diagram of the vehicle's 10 board electronics system. Part of the board electronics system is an infotainment system, which comprises a touch-sensitive display unit 20, a computing device 40, an input unit 50, and a memory 60. The display unit 20 is connected to the computing device 40 via a data line 70 and includes both a display area for displaying variable graphical information and an operator interface (touch-sensitive layer) arranged above the display area) for inputting commands by a user. The input unit 50 is connected to the computing device 40 via a further data line 90.

The memory device 60 is connected to the computing device 40 via a further data line 80. In the memory 60, a pictogram directory and / or symbol directory is deposited with the pictograms and / or symbols for possible overlays of additional information.

The other parts of the infotainment system such as camera 150, radio 140, navigation device 130, telephone 120 and instrument cluster 110 are connected via the data bus 100 with the computing device 40. As data bus 100 the high-speed variant of the CAN bus according to ISO standard 11898-2 may be taken into consideration. Alternatively, for example, the use of an Ethernet-based bus system such as IEEE 802.03cg is another example. Bus systems in which the data transmission via optical fibers happens are also usable. Examples are the MOST Bus (Media Oriented System Transport) or the D2B Bus (Domestic Digital Bus). For inbound and outbound wireless communication, the vehicle 10 is equipped with a communication module 160. It can be used for mobile communication, e.g. mobile communication according to the LTE standard, according to Long Term Evolution.

Reference numeral 172 denotes an engine control unit. The reference numeral 174 corresponds to an ESC control unit corresponding to electronic stability control and the reference numeral 176 denotes a transmission control unit. The networking of such control units, all of which are allocated to the category of the drive train, typically occurs with the CAN bus system (controller area network) 104. Since various sensors are installed in the motor vehicle and these are no longer only connected to individual control units, such sensor data are also distributed via the bus system 104 to the individual control devices.

However, the modern motor vehicle can also have further components such as further surroundings scanning sensors like a LIDAR (Light Detection and Ranging) sensor 186 or RADAR (Radio Detection and Ranging) sensor 182 and more video cameras 151, e.g. as a front camera, rear camera or side camera. Such sensors are used more and more in vehicles for surroundings observation. Further control devices, such as an automatic driving control unit ADC 184 or a parking assistance control device (not shown), etc., may be provided in the motor vehicle. It is noted that the parking assistance functionality is included in the automatic driving control unit ADC 184. There may be other systems in the vehicle, too such as UWB transceivers for inter vehicle distance measurement (not shown). The UWB transceivers may typically be used for a short distance observation, e.g. 3 to 10 m. The RADAR and LIDAR sensors 182, 186 could be used for scanning a range up to 150 m or 250 m and the cameras 150, 151 cover a range from 30 to 120 m. The components 182 to 186 are connected to another communication bus 102. The Ethernet-Bus may be a choice for this communication bus 102 due to its higher bandwidth for data transport. One Ethernet-Bus adapted to the special needs of car communication is standardized in the IEEE 802.1Q specification. Moreover, a lot of information for surroundings observation may be received via V2V communication from other road participants. Particularly for those road participants not being in line of sight LOS to the observing vehicle it is very advantageous to receive the information about their position and motion via V2V communication.

Reference number 190 denotes an on-board diagnosis interface.

For the purpose of transmitting the vehicle-relevant sensor data via the communication interface 160 to another vehicle or to a central computer 320 or elsewhere, the gateway 30 is provided. This is connected to the different bus systems 100, 102, 104 and 106. The gateway 30 is adapted to convert the data it receives via the one bus to the transmission format of the other bus so that it can be distributed in the packets specified there. For the forwarding of this data to the outside, i.e. to another motor vehicle or to central computer 320, the on-board communication module 160 is equipped with the communication interface to receive these data packets and, in turn, to convert them into the transmission format of the correspondingly used mobile radio standard. The gateway 30 takes all the necessary format conversions if data are to be exchanged between the different bus systems inside the vehicle if required.

It is expressively mentioned that the vehicles 1001 to 1010 depicted in Figs. 1 to 3 also may be equipped with such kind of board electronics system as shown in Fig. 5. It is not needed that the vehicles 1001 to 1010 will have the full autonomous driving capability as defined in level 5 of the SAE autonomous driving table, corresponding to full autonomous driving capability. It will be sufficient that the vehicles 1001 to 1010 are equipped with a driver assistance system for parking.

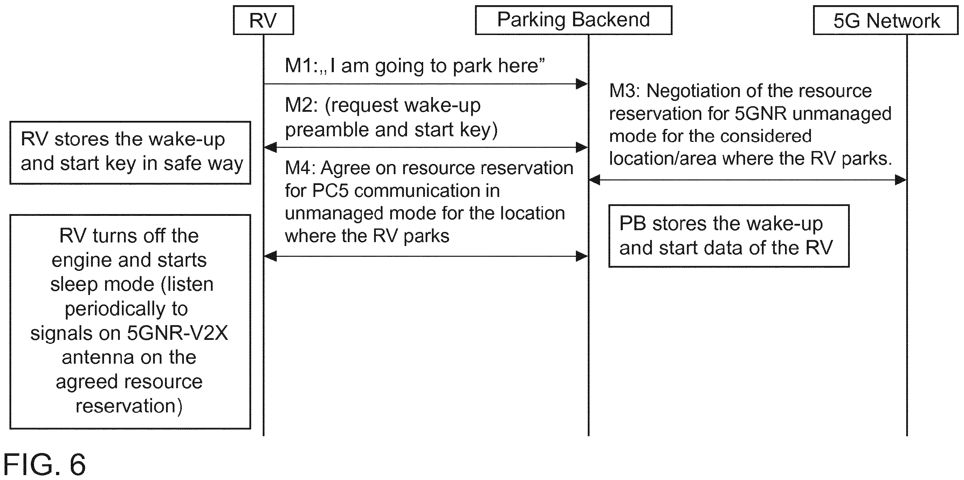

In the following, a preferred embodiment of the invention shall be described in more detail with reference to Figs. 6 to Fig. 10.

Fig. 6 depicts the message exchange between one of the vehicles 1001 to 1006 and a parking backend server when they have reached the parking position and stop operation of the engine or the electric motor. The parking backend server preferably is a server which is close to the parking lot or to the public road where parking is allowed in dedicated parking places or at the side of the road. Such parking backend server might be located at a road side unit such as the road side unit 310 depicted in Fig. 4. An alternative embodiment is the localization of the parking backend server at the base station nearby the parking area, see reference number 220.

In Fig. 6, the parked vehicle is referenced with reference sign RV corresponding to "remote vehicle". In the depicted parking situation of Fig. 1, this might be one or more or all of the vehicles 1001 to 1006. It is considered that a vehicle 1003 is the remote vehicle RV. When vehicle 1003 has arrived at its parking place, and the driver has left the car, the on-board communication module 160 transmits a message to the parking backend server 220 via Uu interface that it intends to park and to turn of the motor / engine in message M 1. What happens next is a message exchange M2 between remote vehicle RV and parking backend server 220, where remote vehicle RV requests a wakeup preamble and a start key command from parking backend server 220 and the parking backend server 220 returns these two information items individualized for the requesting remote vehicle RV. The function of these information items are: With the reception of said negotiated wakeup preamble, the on-board communication module 160 will be switched on from sleep mode to normal mode. With the start key information item, the board electronics will be switched to power-on mode and the engine will be started. Both information items are parts of a message to which the remote vehicle RV needs to react. When the remote vehicle RV is in park mode, the board electronics system is in power off or sleep mode. The on-board communication module 160 will be put in sleep mode. The sleep mode will be used to save energy. However, in sleep mode the on-board communication module 160 needs to monitor if a wake-up message has arrived. In order to implement a very energy efficient monitoring function it will also be negotiated in a further message exchange M3 to which communication resources remote vehicle RV should listen in sleep mode on the PC5 interface. This will be negotiated with the network operator to which the remote vehicle RV has subscribed. In one embodiment, the parking backend server 220 gets the resource reservation proposal from base station 210. In another embodiment, the base station 210 forwards the request to EPC 200 where it will be routed to the Internet 300 and finally to a backend server 320 of the network operator. Once the proposal is received, the parking backend server 220 forwards the resource reservation information to remote vehicle RV via Uu-interface with message exchange M4. The parking backend server 220 stores the wake-up preamble and start key from message exchange M2 in memory. The on-board communication module 160 stores the wake-up preamble and start key from message exchange M2 in its memory. And so it does with the resource reservation information from message exchange M4. This way, it will be agreed on which resource block or blocks the remote vehicle RV should listen in sleep mode on the PC5 interface. The effect of this type of resource reservation is that there is no need for a broadband reception operation in the on-board communication module 160 and higher energy consumption for monitoring all communication resources on the PC5 interface all the times in normal operation mode. On one hand, the effect of a reduced energy consumption is due to the fact that the on-board communication module 160 enters sleep mode, where it only sporadically listens to the signals received by the antenna.

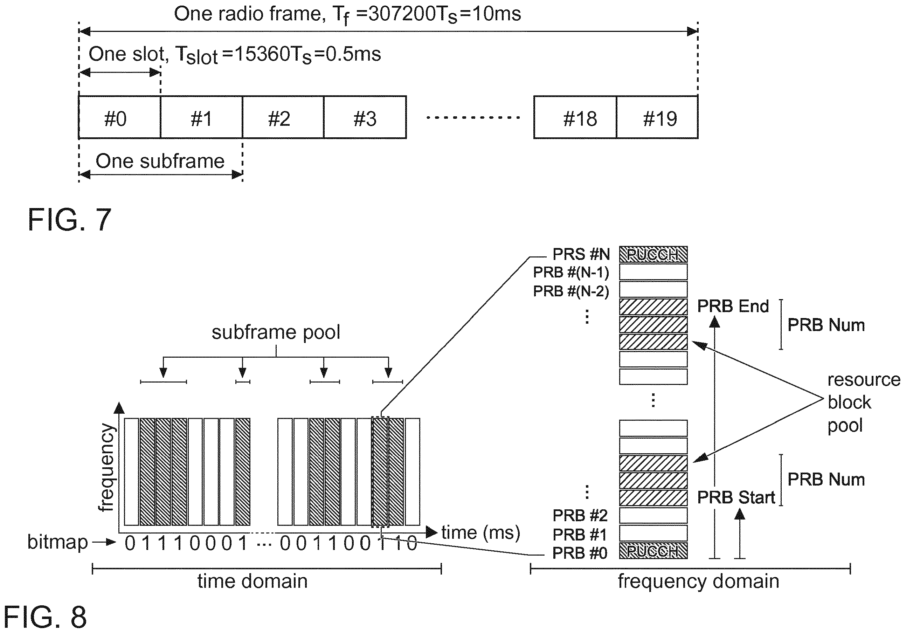

To further explain this, it will to be described how said data communication via PC5 interface works. PC5 communication is sometimes called direct communication and often also referred to be sidelink communication. Central to sidelink transmission and reception is the concept of so-called resource pools (RP). A resource pool is a set of transmission resources assigned to a sidelink operation. It consists of the subframes and the resource blocks transferred in the subframe. Fig. 7 shows the participation of a radio frame in LTE communication via Uu interface in subframes. Each sub-frame consists of two time slots with a duration of 0.5 ms each. Fig. 8 then shows a collection of subframes which are pooled. In each subframe, a plurality of resource blocks can be selected to belong said resource pool. This way, a pretty small resource pool may be reserved for the parking assistance wake-up communication. So, if e.g. only one sub-frame will be reserved with a few resource blocks this resource pool has a narrow bandwidth assigned, since in frequency domain a resource block occupies just 180 kHz of bandwidth in the PC5 spectrum. The receiver in the on-board communication module 160, which is put in sleep mode, then does not need to scan the whole bandwidth of the PC5 communication. It will just evaluate the signals in the 180 kHz bandwidth assigned to the reserved resource pool.

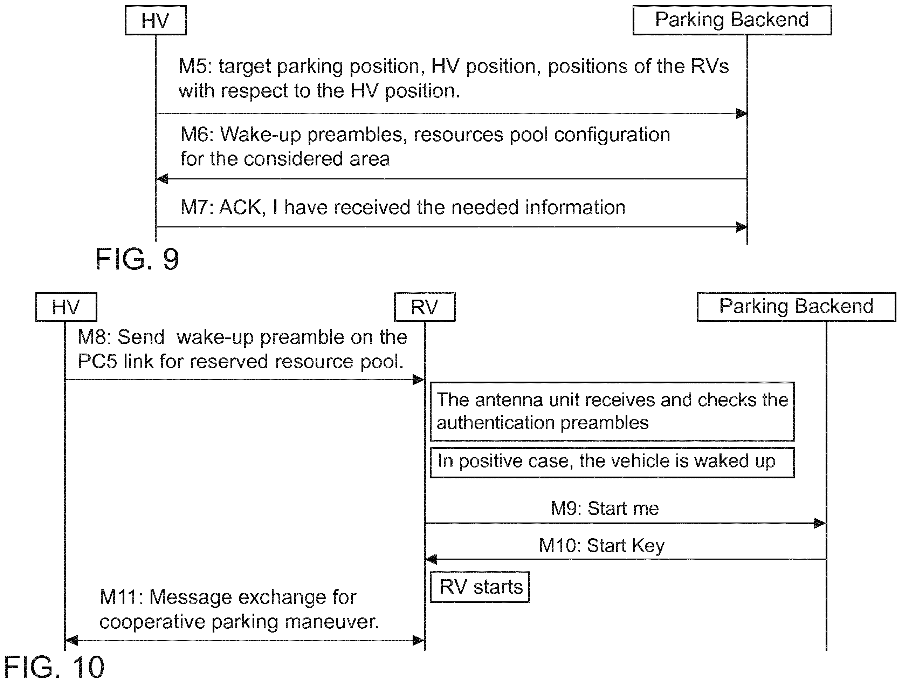

Fig. 9 schematically illustrates the message exchange when an arriving vehicle 1010 arrives at the parking place depicted in Fig.1 but needs to start a cooperative parking maneuver to enter it. With message M5 the arriving vehicle HV indicates that it wants to park. It will identify its position derived with the help of its navigation system 130 and the estimated positions of the parked vehicles 1001 to 1004. Position estimation can be performed with the help of the surrounding observation sensors 150, 151, 182 and 184, as explained in connection Fig. 5. In message M5 or a further message, it will also be indicated that arriving vehicle HV requests the wake-up preamble, start key and resource pool configuration for each of the parked vehicles 1001 to 1004. The message is sent via Uu-interface to parking backend 220. Parking backend 220 returns the requested information in message transfer M6. Arriving vehicle HV acknowledges receipt of this information in message M7 to parking backend server 220.

Fig. 10 then shows how the parked vehicles 1002 and 1003 will be woken-up to perform the cooperative parking maneuver on request of the arriving vehicle 1010. With message transfer M8, the arriving vehicle sends a wake-up message to parked vehicle 1003 on the PC5 link but just with the subframe or set of subframes according to the resource pool that is reserved for this wake-up message. The parked vehicle 1003 is listening to this resource pool sporadically. The arriving vehicle 1010 will repeat the message that often that it is made sure that the parked vehicle 1003 receives this information in its sleep mode monitoring cycle.

Once parked vehicle 1003 has received the message M8, the on-board communication module 160 will leave its sleep mode and it will check the authentication of the information received in the wake-up message and, if authenticated, the on-board communication module 160 will send a start request message to the parking backend server 220 with message M9. Of course, the parked vehicle 1003 will be identified in the message with the help of the estimated position information. Parking backend server 220 then transfers the start key information in a message M10 to the parked vehicle 1003. Once the parked vehicle 1003 has received the start key and has authenticated it, it will power-up its board electronics system. What happens after that is the message exchange for the cooperative parking maneuver, where arriving vehicle 1010 will ask the parked vehicle 1003 to drive back a certain distance, e.g. 80 cm. Once that is done, the arriving vehicle 1010 will send a wake-up message to the parked vehicle 1002 and also ask it to drive back such that finally the gap between parked vehicles 1001 and 1002 is increased such that arriving vehicle 1010 can enter it properly. Once each cooperative parking maneuver is finished, the parked vehicle 1001, 1002 receives an end of cooperative parking maneuver message and goes back to sleep mode.

In further embodiments, a computer program comprises program code, which, when executed by a computing system, causes the computing system to perform the method for starting a parked vehicle located on a parking position in park mode to perform a cooperative parking maneuver. The computer programs will be executed in a processing unit of said on-board-communication module 160.

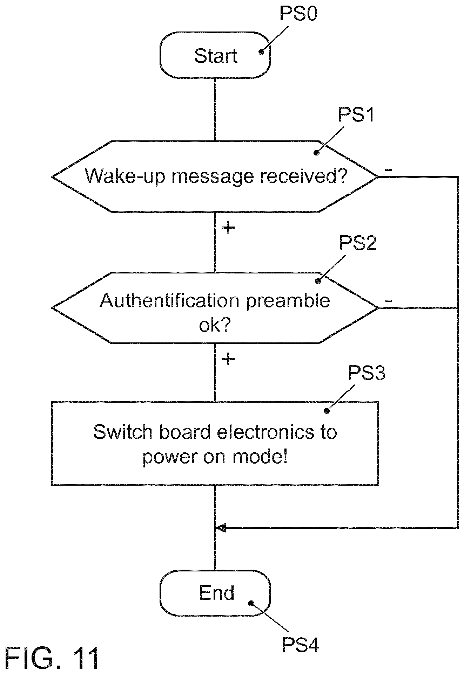

A flow chart for a computer program, which runs on a processor of the on-board communication unit 160, is shown in Fig. 11. This program will be executed each time when the on-board communication unit 160 listens periodically to wake-up messages. The program starts in step PS0. In step PS1, the on-board communication unit 160 listens to a wake-up message on the reserved resources. If no wake-up message is received during the listening phase, the program ends in step PS4. If a wake-up message has been received, the on-board communication unit 160 checks the authentication preamble received in the wake-up message. This can be done by calculating hash values by utilizing pre-installed certificates. If the authentication test is positive, the board electronics of the parked vehicle will be switched to power-on mode. If the authentication test is negative, the program ends in step PS4.

Likewise in another embodiment a computer program comprises program code, which, when executed by a computing system, causes the computing system to perform a method for requesting a cooperative parking maneuver by an arriving vehicle which arrives at a location of a parked vehicle intending to perform said cooperative parking maneuver with said parked vehicle. The steps of these two computer programs are disclosed in the drawings of Fig. 6, 9 and 10. The computer programs will be executed in a processing unit of said on-board-communication module 160.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to and executed by a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

The disclosure is not restricted to the exemplary embodiments described here. There is scope for many different adaptations and developments, which are also considered to belong to the disclosure. The disclosure of the invention being defined by the appended claims.

### List of Reference Numerals

- 10: Vehicle
- 20: Touch screen
- 30: Gateway
- 40: Computing device
- 50: Operation element unit
- 60: Memory unit
- 70: Data line to display unit
- 80: Data line to memory unit
- 90: Data line to operation element unit
- 100: 1^{st} Data bus
- 102: 2^{nd} Data bus
- 104: 3^{rd} Data bus
- 106: 4^{th} Data bus
- 110: Multifunction display
- 120: Telephone
- 130: Navigation system
- 140: Radio
- 150: Front camera
- 151: Back, Left, Right camera
- 160: On-Board Communication Unit
- 172: Engine control device
- 174: ESP control device
- 176: Transmission control device
- 182: RADAR sensor
- 184: Automatic driving control device
- 186: LIDAR sensor
- 190: On-Board diagnosis interface
- 200: Evolved packet core
- 210: Base station
- 220: Parking backend server
- 300: Internet
- 310: Road side unit
- 320: Backend server
- 1001-1006: Parked vehicle
- 1020: Arriving vehicle
- M1 - M11: Different messages
- Uu: V2N communication link
- PC5: V2V communication link
- S1: EPC communication link
- PS0 - PS4: Different program steps of wake-up procedure

## Claims

1. A method for starting a parked vehicle located in a parking position in a park mode to perform a cooperative parking maneuver, said parked vehicle (1002, 1003) being equipped with an on-board communication module (160), **characterized in that** said method comprises the steps of:
- registering, with an exchange of messages (M2, M3, M4), wake-up information in a parking backend server (220) once the parked vehicle (1002, 1003) is put in said park mode, said wake-up information comprising information about communication resources to be used for sending a wake-up message (M8) to said parked vehicle (1002, 1003) and for identifying said wake-up message (M8);
- listening to said registered communication resources during said park mode and, when receiving said wake-up message (M8) from an arriving vehicle (1010), leaving said park mode and switching to a normal operation mode;
- sending a starting request message (M9) to said parking backend server (220);
- receiving a starting message (M10) from said parking backend server (220); and
- directly or indirectly starting the engine or motor for performing said cooperative parking maneuver.

2. The method according to claim 1, wherein said step of listening to said registered communication resources during said park mode comprises sporadically listening to said registered communication resources during said park mode, wherein the step of sporadically listening to said registered communication resources during said park mode comprises listening to said registered communication resources periodically in an interval which is longer than an interval with which said arriving vehicle (1010) should repeat its wake-up message.

3. The method according to claim 1 or 2, wherein said registered wake-up information comprises an authentication preamble, which needs to be used in said wake-up message (M8) which is sent by the arriving vehicle (1010) to identify said wake-up message (M8).

4. The method according to any of the preceding claims, wherein said registered wake-up information further comprises a resource pool configuration to which said parked vehicle (1002, 1003) should listen in said park mode.

5. The method according to claim 3, wherein a step of checking the authentication preamble is executed as part of a wakeup process before waking up the whole board electronics of said parked vehicle (1002, 1003), and wherein the step of waking up the vehicles board electronics is suppressed if said step of checking the authentication preamble results in the finding that the authentication preamble does not match the registered authentication preamble.

6. The method according to any of the preceding claims, wherein said registered wake-up information further comprises a start key, which said parking backend server (220) should send in said starting message (M10) in order to start the engine or motor for performing said cooperative parking maneuver.

7. The method according to any of the preceding claims, wherein said messages for registering wake-up information (M2, M3, M4) and said starting request message (M9) are sent in a format of an LTE or 5G Uu-link communication message, and wherein said wake-up message (M8) is sent in a format of an LTE or 5G direct-link communication message.

8. A computer program comprising instructions, which, when executed by a computer, cause the computer to perform the steps of a method according to any of claims 1 to 7.

9. A method for requesting a cooperative parking maneuver by an arriving vehicle (1010) which arrives at a location of a parked vehicle (1002, 1003) and intends to perform said cooperative parking maneuver with said parked vehicle (1002, 1003), said method comprising the step of sending a cooperative parking intention message (M5) to a parking backend server (220), **characterized in that** said cooperative parking intention message (M5) comprises at least an estimated position of said parked vehicle (1002, 1003) and a request for wake-up information for said parked vehicle (1002, 1003), said wake-up information comprising information about communication resources to be used for sending a wake-up message (M8) to said parked vehicle (1002, 1003) and for identifying said wake-up message (M8).

10. The method according to claim 9, wherein said cooperative parking intention message (M5) further comprises a position of the arriving vehicle (1010), and wherein said estimated position of the parked vehicle (1002, 1003) is formatted as a position relative to the position of said arriving vehicle (1010).

11. The method according to claim 9 or 10, wherein said arriving vehicle (1010) receives the requested wake-up information from said parking backend server (220) in one or more response messages (M6) to said cooperative parking intention message (M1M5), said response messages (M6) comprising an authentication preamble, which needs to be used in a wake-up message (M8) which is sent by the arriving vehicle (1010) to identify said wake-up message.

12. The method according to claim 11, wherein said one or more response messages (M6) further comprise a resource pool configuration to be used for sending said wake-up message (M8) to said parked vehicle (1002, 1003) to which said parked vehicle (1002, 1003) is listening in a park mode.

13. The method according to claim 11 or 12, wherein said arriving vehicle (1010) repeatedly sends said wake-up message (M8) to said parked vehicle (1002, 1003) after having received the requested wake-up information from said parking backend server (220) in one or more response messages (M6).

14. The method according to any one of claims 9 to 13, wherein said cooperative parking intention message (M5) and said one or more response message (M6) to said cooperative parking intention message (M5) are sent in a format of an LTE or 5G Uu-link communication message, and wherein said wake-up message is sent in a format of an LTE or 5G direct-link communication message.

15. A computer program comprising instructions, which, when executed by a computer, cause the computer to perform the steps of a method according to any one of claims 9 to 14.

## Patentansprüche

1. Verfahren zum Starten eines geparkten Fahrzeugs, das sich in einer Parkposition in einer Parkbetriebsart befindet, um ein kooperatives Parkmanöver auszuführen, wobei das geparkte Fahrzeug (1002, 1003) mit einem Bordkommunikationsmodul (160) ausgestattet ist, **dadurch gekennzeichnet, dass** das Verfahren die folgenden Schritte umfasst:
- Registrieren von Weckinformationen in einem Park-Backend-Server (220) mit einem Austausch von Nachrichten (M2, M3, M4), wenn das geparkte Fahrzeug (1002, 1003) in die Parkbetriebsart versetzt wird, wobei die Weckinformationen Informationen über Kommunikationsressourcen umfassen, die zum Senden einer Wecknachricht (M8) an das geparkte Fahrzeug (1002, 1003) und zum Identifizieren der Wecknachricht (M8) verwendet werden sollen;
- Horchen auf die registrierten Kommunikationsressourcen während der Parkbetriebsart und Verlassen der Parkbetriebsart und Schalten in eine Normalbetriebsart, wenn die Wecknachricht (M8) eines ankommenden Fahrzeugs (1010) empfangen wird;
- Senden einer Startanforderungsnachricht (M9) an den Park-Backend-Server (220);
- Empfangen einer Startnachricht (M10) von dem Park-Backend-Server (220); und
- Direktes oder indirektes Starten des Antriebs oder des Motors zum Ausführen des kooperativen Parkmanövers.

2. Verfahren nach Anspruch 1, bei dem der Schritt des Horchens auf die registrierten Kommunikationsressourcen während der Parkbetriebsart das sporadische Horchen auf die registrierten Kommunikationsressourcen während der Parkbetriebsart umfasst, wobei der Schritt des sporadischen Horchens auf die registrierten Kommunikationsressourcen während der Parkbetriebsart das periodische Horchen auf die registrierten Kommunikationsressourcen in einem Intervall, das länger ist als ein Intervall, mit dem das ankommende Fahrzeug (1010) seine Wecknachricht wiederholen sollte, umfasst.

3. Verfahren nach Anspruch 1 oder 2, wobei die registrierten Weckinformationen eine Authentifizierungspräambel umfassen, die in der Wecknachricht (M8), die durch das ankommende Fahrzeug (1010) gesendet wird, verwendet werden muss, um die Wecknachricht (M8) zu identifizieren.

4. Verfahren nach einem der vorhergehenden Ansprüche, wobei die registrierten Weckinformationen ferner eine Ressourcen-Pool-Konfiguration umfassen, auf die das geparkte Fahrzeug (1002, 1003) in der Parkbetriebsart horchen sollte.

5. Verfahren nach Anspruch 3, wobei ein Schritt des Prüfens der Authentifizierungspräambel als Teil eines Weckprozesses ausgeführt wird, bevor die gesamte Bordelektronik des geparkten Fahrzeugs (1002, 1003) geweckt wird, und wobei der Schritt des Weckens der Bordelektronik des Fahrzeugs unterbunden wird, falls der Schritt des Prüfens der Authentifizierungspräambel zu dem Ergebnis führt, dass die Authentifizierungspräambel nicht mit der registrierten Authentifizierungspräambel übereinstimmt.

6. Verfahren nach einem der vorhergehenden Ansprüche, wobei die registrierten Weckinformationen ferner einen Startschlüssel umfassen, den der Park-Backend-Server (220) in der Startnachricht (M10) senden sollte, um den Antrieb oder den Motor zu starten, um das kooperative Parkmanöver auszuführen.

7. Verfahren nach einem der vorhergehenden Ansprüche, wobei die Nachrichten zum Registrieren von Weckinformationen (M2, M3, M4) und die Startanforderungsnachricht (M9) in einem Format einer LTE- oder 5G-Uu-Verbindungs-Kommunikationsnachricht gesendet werden, und wobei die Wecknachricht (M8) in einem Format einer LTE- oder 5G-Direktverbindungs-Kommunikationsnachricht gesendet wird.

8. Computerprogramm, das Anweisungen umfasst, die, wenn sie durch einen Computer ausgeführt werden, veranlassen, dass der Computer die Schritte eines Verfahrens nach einem der Ansprüche 1 bis 7 ausführt.

9. Verfahren zum Anfordern eines kooperativen Parkmanövers durch ein ankommendes Fahrzeug (1010), das an einem Ort eines geparkten Fahrzeugs (1002, 1003) ankommt und das beabsichtigt, das kooperative Parkmanöver mit dem geparkten Fahrzeug (1002, 1003) auszuführen, wobei das Verfahren den Schritt des Sendens einer Nachricht (M5) über die Absicht des kooperativen Parkens an einen Park-Backend-Server (220) umfasst, **dadurch gekennzeichnet, dass** die Nachricht (M5) über die Absicht des kooperativen Parkens wenigstens eine geschätzte Position des geparkten Fahrzeugs (1002, 1003) und eine Anforderung für Weckinformationen für das geparkte Fahrzeug (1002, 1003) umfasst, wobei die Weckinformationen Informationen über Kommunikationsressourcen umfassen, die zum Senden einer Wecknachricht (M8) an das geparkte Fahrzeug (1002, 1003) und zum Identifizieren der Wecknachricht (M8) verwendet werden sollen.

10. Verfahren nach Anspruch 9, wobei die Nachricht (M5) über die Absicht des kooperativen Parkens ferner eine Position des ankommenden Fahrzeugs (1010) umfasst, und wobei die geschätzte Position des geparkten Fahrzeugs (1002, 1003) als eine Position relativ zu der Position des ankommenden Fahrzeugs (1010) formatiert wird.

11. Verfahren nach Anspruch 9 oder 10, wobei das ankommende Fahrzeug (1010) die angeforderten Weckinformationen von dem Park-Backend-Server (220) in einer oder mehreren Antwortnachrichten (M6) auf die Nachricht (M1M5) über die Absicht des kooperativen Parkens empfängt, wobei die Antwortnachricht (M6) eine Authentifizierungspräambel umfasst, die in einer Wecknachricht (M8), die durch das ankommende Fahrzeug (1010) gesendet wird, verwendet werden muss, um die Wecknachricht zu identifizieren.

12. Verfahren nach Anspruch 11, wobei die eine oder die mehreren Antwortnachrichten (M6) ferner eine Ressourcen-Pool-Konfiguration umfassen, die zum Senden der Wecknachricht (M8) an das geparkte Fahrzeug (1002, 1003) verwendet werden soll und auf die das geparkte Fahrzeug (1002, 1003) in einer Parkbetriebsart horcht.

13. Verfahren nach Anspruch 11 oder 12, wobei das ankommende Fahrzeug (1010) die Wecknachricht (M8) wiederholt an das geparkte Fahrzeug (1002, 1003) sendet, nachdem es die angeforderten Weckinformationen in einer oder mehreren Antwortnachrichten (M6) von dem Park-Backend-Server (220) empfangen hat.

14. Verfahren nach einem der Ansprüche 9 bis 13, wobei die Nachricht (M5) über die Absicht des kooperativen Parkens und die eine oder die mehreren Antwortnachrichten (M6) auf die Nachricht (M5) über die Absicht des kooperativen Parkens in einem Format einer LTE- oder 5G-Uu-Verbindungs-Kommunikationsnachricht gesendet werden, und wobei die Wecknachricht in einem Format einer LTE- oder 5G-Direktverbindungs-Kommunikationsnachricht gesendet wird.

15. Computerprogramm, das Anweisungen umfasst, die, wenn sie durch einen Computer ausgeführt werden, veranlassen, dass der Computer die Schritte eines Verfahrens nach einem der Ansprüche 9 bis 14 ausführt.

## Revendications

1. Procédé de démarrage d'un véhicule en stationnement situé dans une position de stationnement en mode parking pour effectuer une manoeuvre de stationnement coopératif, ledit véhicule en stationnement (1002, 1003) étant équipé d'un module de communication embarqué (160), **caractérisé en ce que** ledit procédé comprend les étapes suivantes :
- l'enregistrement, par un échange de messages (M2, M3, M4), d'informations de réveil dans un serveur backend de stationnement (220) une fois que le véhicule en stationnement (1002, 1003) est placé dans ledit mode parking, lesdites informations de réveil comprenant des informations sur les ressources de communication à utiliser pour envoyer un message de réveil (M8) audit véhicule en stationnement (1002, 1003) et pour identifier ledit message de réveil (M8) ;
- l'écoute desdites ressources de communication enregistrées pendant ledit mode parking et, lors de la réception dudit message de réveil (M8) d'un véhicule arrivant (1010), la sortie dudit mode parking et le passage à un mode de fonctionnement normal ;
- l'envoi d'un message de demande de démarrage (M9) audit serveur backend de stationnement (220) ;
- la réception d'un message de démarrage (M10) en provenance dudit serveur backend de stationnement (220) ; et
- le démarrage direct ou indirect du actionneur ou moteur pour effectuer ladite manoeuvre de stationnement coopératif.

2. Le procédé selon la revendication 1, ladite étape d'écoute desdites ressources de communication enregistrées pendant ledit mode parking comprenant l'écoute sporadique desdites ressources de communication enregistrées pendant ledit mode parking, l'étape d'écoute sporadique desdites ressources de communication enregistrées pendant ledit mode parking comprenant l'écoute périodique desdites ressources de communication enregistrées dans un intervalle qui est plus long qu'un intervalle avec lequel ledit véhicule arrivant (1010) doit répéter son message de réveil.

3. Le procédé selon la revendication 1 ou 2, lesdites informations de réveil enregistrées comprenant un préambule d'authentification qui doit être utilisé dans ledit message de réveil (M8) envoyé par le véhicule arrivant (1010) pour identifier ledit message de réveil (M8).

4. Le procédé selon l'une des revendications précédentes, les informations de réveil enregistrées comprenant en outre une configuration du pool de ressources que le véhicule en stationnement (1002, 1003) doit écouter dans le mode parking.

5. Le procédé selon la revendication 3, une étape de vérification du préambule d'authentification étant exécutée dans le cadre d'un processus de réveil avant de réveiller l'ensemble de l'électronique de bord dudit véhicule en stationnement (1002, 1003), et l'étape de réveil de l'électronique de bord du véhicule étant supprimée si ladite étape de vérification du préambule d'authentification aboutit à la conclusion que le préambule d'authentification ne correspond pas au préambule d'authentification enregistré.

6. Le procédé selon l'une des revendications précédentes, lesdites informations de réveil enregistrées comprenant en outre une clé de démarrage que ledit serveur backend de stationnement (220) doit envoyer dans ledit message de démarrage (M10) afin de démarrer le actionneur ou moteur pour effectuer ladite manoeuvre de stationnement coopératif.

7. Le procédé selon l'une des revendications précédentes, lesdits messages d'enregistrement des informations de réveil (M2, M3, M4) et ledit message de demande de démarrage (M9) étant envoyés dans un format de message de communication LTE ou 5G Uu-link, et ledit message de réveil (M8) étant envoyé dans un format de message de communication LTE ou 5G direct-link.

8. Programme d'ordinateur comprenant des instructions qui, lorsqu'elles sont exécutées par un ordinateur, permettent à ce dernier d'exécuter les étapes d'un procédé selon l'une des revendications 1 à 7.

9. Procédé de demande d'une manoeuvre de stationnement coopératif par un véhicule arrivant (1010) à l'emplacement d'un véhicule en stationnement (1002, 1003) et ayant l'intention d'effectuer ladite manoeuvre de stationnement coopératif avec ledit véhicule en stationnement (1002, 1003), ledit procédé comprenant l'étape d'envoi d'un message d'intention de stationnement coopératif (M5) à un serveur backend de stationnement (220), **caractérisé en ce que** ledit message d'intention de stationnement coopératif (M5) comprend au moins une position estimée dudit véhicule en stationnement (1002, 1003) et une demande d'informations de réveil pour ledit véhicule en stationnement (1002, 1003), lesdites informations de réveil comprenant des informations sur les ressources de communication à utiliser pour envoyer un message de réveil (M8) audit véhicule en stationnement (1002, 1003) et pour identifier ledit message de réveil (M8).

10. Le procédé selon la revendication 9, ledit message d'intention de stationnement coopératif (M5) comprenant en outre une position du véhicule arrivant (1010), et ladite position estimée du véhicule en stationnement (1002, 1003) étant formatée comme une position relative à la position dudit véhicule arrivant (1010).

11. Le procédé selon la revendication 9 ou 10, ledit véhicule arrivant (1010) recevant les informations de réveil demandées dudit serveur backend de stationnement (220) dans un ou plusieurs messages de réponse (M6) audit message d'intention de stationnement coopératif (M1M5), lesdits messages de réponse (M6) comprenant un préambule d'authentification qui doit être utilisé dans un message de réveil (M8) envoyé par le véhicule arrivant (1010) pour identifier ledit message de réveil.

12. Le procédé selon la revendication 11, ledit ou lesdits messages de réponse (M6) comprenant en outre une configuration de pool de ressources à utiliser pour envoyer ledit message de réveil (M8) audit véhicule en stationnement (1002, 1003) auquel ledit véhicule en stationnement (1002, 1003) est à l'écoute dans un mode parking.

13. Le procédé selon la revendication 11 ou 12, ledit véhicule arrivant (1010) envoyant à plusieurs reprises ledit message de réveil (M8) audit véhicule en stationnement (1002, 1003) après avoir reçu les informations de réveil demandées dudit serveur backend de stationnement (220) dans un ou plusieurs messages de réponse (M6).

14. Le procédé selon l'une des revendications 9 à 13, ledit message d'intention de stationnement coopératif (M5) et ledit ou lesdits messages de réponse (M6) audit message d'intention de stationnement coopératif (M5) étant envoyés dans un format de message de communication LTE ou 5G Uu-link, et ledit message de réveil étant envoyé dans un format de message de communication LTE ou 5G direct-link.

15. Programme d'ordinateur comprenant des instructions qui, lorsqu'elles sont exécutées par un ordinateur, permettent à ce dernier d'exécuter les étapes d'un procédé selon l'une des revendications 9 à 14.
